(19) Europäisches Patentamt
European Patent Office
Office européen des brevets

(11) **EP 2 871 892 A1**

(12) **EUROPEAN PATENT APPLICATION**

(43) Date of publication:
**13.05.2015 Bulletin 2015/20**

(51) Int Cl.:
*H04W 64/00* (2009.01)  *G01S 5/02* (2010.01)

(21) Application number: **13191828.6**

(22) Date of filing: **06.11.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Möller, Bernd**<br>   **91239 Henfenfeld (DE)**<br>• **Gasiba, Tiago**<br>   **90482 Nürnberg (DE)** |
| (71) Applicant: **MyOmega System Technologies GmbH**<br>**90411 Nürnberg (DE)** | (74) Representative: **Westphal, Mussgnug & Partner Patentanwälte mbB**<br>**Herzog-Wilhelm-Strasse 26**<br>**80331 München (DE)** |

(54) **Indoor positioning by pattern matching of cell fingerprints**

(57) The application relates to the field of indoor positioning. Outside buildings, a location information may be obtained through the GPS (Global Positioning System) system that employs a plurality of satellites. GPS signals that include the time information, and the satellite position information required for calculating the position on or above the Earth's surface often have a low signal strength or are not available inside buildings, because the outer shell of a building may attenuate RF (Radio Frequency) signals, such as GPS signals. However, there may be a need to detect the position of an electronic device, such as a mobile phone (smart phone), a mobile computer, or the like inside a building. For example, in case of a mobile computer, this information may be used to automatically print documents from the computer on a network printer that is nearby the position of the computer. Thus, the problem underlying the present invention is to detect a position of an electronic device, in particular a position inside a building. This problem is solved by a method performed by a conventional mobile electronic device, such as a mobile phone, which detects a radio cell profile at one position (101), and compares it with at least one reference radio cell profile (102), which is a radio cell profile associated with a reference position. When the detected radio cell profile matches one reference radio cell profile (103), it is assumed that the position of the electronic device corresponds to the reference position associated with the matching reference radio cell profile. The radio cell profile includes at least one radio cell identifier or comprises at least one signal characteristic of a radio signal associated with a radio cell, such as the signal strength.

RCP @ P1    RP @ P2    RP @ P3

FIG 3

**Description**

Embodiments of the present invention relate to a method for detecting a position, in particular for detecting a position inside a building.

Outside buildings, a location information may be obtained through the GPS (Global Positioning System) system that employs a plurality of satellites. Each of these satellites permanently transmits messages that include the time the message was transmitted, and the satellite position at the time the message was transmitted. Based on these messages received from three or more satellites a GPS receiver is capable of calculating its position on or above the Earth's surface.

GPS signals that include the time information, and the satellite position information required for calculating the position on or above the Earth's surface often have a low signal strength or are not available inside buildings, because the outer shell of a building may attenuate RF (Radio Frequency) signals, such as GPS signals. However, there may be a need to detect the position of an electronic device, such as a mobile phone (smart phone), a mobile computer, or the like inside a building. For example, in case of a mobile computer, this information may be used to automatically print documents from the computer on a network printer that is nearby the position of the computer.

Thus, the problem underlying the present invention is to detect a position of an electronic device, in particular a position inside a building.

This problem is solved by a method according to claim 1. Specific embodiments and modifications are disclosed in the dependent claims.

One embodiment of the invention relates to a method. The method includes detecting a radio cell profile by an electronic device, comparing the detected radio cell profile with at least one reference radio cell profile that has a reference position associated therewith, and detecting a position of the electronic device based on the comparison.

Examples are explained below with reference to the drawings. The drawings serve to illustrate certain principles, so that only aspects necessary for understanding these principles are illustrated. The drawings are not to scale. In the drawings the same reference characters denote like features.

Figure 1    schematically illustrates one example of a radio cell scenario;

Figure 2    illustrates reference radio cell profiles according to one embodiment;

Figure 3    illustrates reference radio cell profiles according to one embodiment;

Figure 4    shows a flowchart that illustrates one embodiment of a method for detecting a position.

A modern communication infrastructure typically includes a plurality of radio transceivers that provide wireless access to different types of communication systems (communication networks). Those communication networks are, for example, public mobile communication networks, such as networks based on the GSM (GPRS), CDMA (3Gpp2), UMTS (WCDMA), or LTE standard, or local networks. Examples of a local network include a WLAN (Wireless Local Area Networks, WIFI), a Bluetooth (BT) network, or a network based on one of the home control (home automation) protocol, such as ZigBee, Z-Wave, or Enocean. Those home control protocols are wireless protocols that use the so-called ISM (Industrial Medical Scientific) frequency band. Each of these transceivers (which in case of a public mobile communication systems are also referred to as base stations) covers a certain geographic area, so that electronic devices, such as mobile phones, laptop computers, or tablet computers, that are located in this area may access the corresponding communication system through this transceiver. A geographic area covered by one transceiver will be referred to as a radio cell in the following.

Since several different wireless communication networks coexist, radio cells of different networks, or even radio cells of one and the same network, may overlap. That is, there are geographic positions that are covered by two or more radio cells.

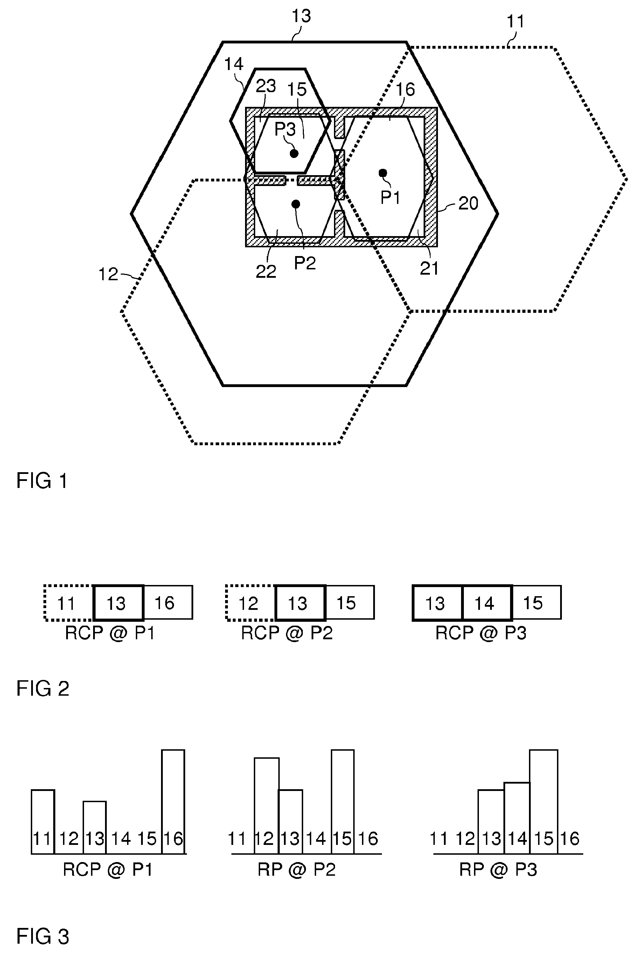

Figure 1 schematically illustrates a typical radio cell scenario. Figure 1 schematically shows a geographic area that is covered by a plurality of radio cells 11-16. In each of these radio cells 11-16 radio signals transmitted by one transceiver associated with the respective radio cell 11-16 can be received. However, these transceivers are not illustrated in Figure 1. The individual radio cells 11-16 can be radio cells of different types of communication networks. For example, radio cells 11, 12 and 14 shown in Figure 1 can be radio cells of a wireless communication system in accordance with the LTE standard, radio cell 13 can be a radio cell of a mobile phone system in accordance to one of the GSM (GPRS), and UMTS (WCDMA) standard, and radio cells 15, 16 can be radio cells of a wireless local area network (WLAN). As can be seen from Figure 1, some of these radio cells 11-16 overlap so that there are geographical positions that are covered by two or more of these radio cells 11-16.

Each of the radio cells 11-16 shown in Figure 1 can be uniquely identified through an identifier. This identifier is transmitted from time to time by the transceiver associated with the respective radio cell. Considering that the individual radio cells 11-16 are unique, and considering that two or more of these radio cells 11-16 overlap, it is possible to detect a geographic position only based on the information which radio cells cover the respective geographic position. The individual radio cells may be identified (differentiated from one another) by evaluating a Radio Bearer Identifier that is transmitted by each transceiver. According to one embodiment, not only the information which radio cells cover the geographic position, but also signal characteristics of the radio signals associated with the individual radio cells is considered in the position detection. Those signal characteristics may include, but are not restricted to, signal strength (power strength), signal density, power spectrum density, or the like. Optionally, a last known GPS position is additionally considered. "The last known GPS position" is the last GPS position that was detected before the mobile device stopped to receive GPS position data. For example, the mobile device may stop to receive GPS position data when a user carrying the mobile device enters a building.

As will be explained below, it is in particular possible to detect positions in buildings with many different rooms, such as office buildings, museums, or the like.

Figure 1 schematically illustrates one floor that includes several rooms 21-23 of a building 20. Reference characters P1, P2, P3 denote local positions (geographic positions) inside the individual rooms 21, 22, 23. Each of these local positions P1, P2, P3 has a radio cell profile (RCP). A "radio cell profile" associated with one position P1-P3 at least indicates which radio cells cover the respective position P1-P3. Optionally, the cell profile associated with one position may additionally include information on neighboring radio cells that do not cover the respective position as the signal strength of the radio signals associated with these cells is to weak to allow an access to the communication network associated with these radio cells. Nevertheless, these weak signals may be detected at a specific position and may be used to more clearly define the radio profile of this position.

According to one embodiment, one radio cell profile only identifies one or more radio cells that cover one local position. Figure 2 schematically illustrates radio cell profiles of the three positions P1-P3 in accordance with this embodiment. A first radio cell profile associated with the first position P1 identifies radio cells 11, 13, and 16, because these radio cells cover the first position P1. That is radio signals from transceivers associated with these radio cells 11, 13 and 16 can be received at the first position P1. The radio cell profile associated with the second position P2 identifies radio cells 12, 13, and 15, because these radio cells 12, 13, and 15 cover the second position P2, and the radio cell profile associated with the third position P3 identifies radio cells 13, 14, and 15, because these radio cells 13, 14, and 15 cover the third position P3.

As can be seen from Figure 2, the radio cell profiles of the three different positions P1-P3 are different, so that a position detection can be based on these radio cell profiles. This is explained in greater detail below.

In the following, the positions P1-P3 shown in Figure 1 will be referred to as a reference positions, and the radio cell profiles associated with these reference positions will be referred to as reference radio cell profiles. Referring to the explanation below, these reference radio cell profiles can be used to detect the position of an electronic device in the building. In the embodiment shown in Figure 1, there is only one reference position in each of these rooms. However, this is only an example. It is also possible to have more than one reference position in each room, especially in a larger room. The reference radio cell profile associated with one reference position can be obtained by detecting the radio cells that cover the reference position, that is by detecting radio signals that can be received at the reference position, and by extracting a Radio Bearer Identifier from each of these radio signals.

According to a further embodiment, a reference radio cell profile associated with a reference position not only includes the information which radio cells cover the respective position. Like a radio cell profile associated with a certain position, the reference radio cell profile may additionally include signal characteristics of the radio signals associated with the radio cells that cover the reference position. Additionally, the reference radio cell profile may include information on neighboring radio cells that do not cover the reference position but the (weak) radio signals of which may be received at the reference position. Radio cell profiles that are each associated with one of the reference positions P1, P2, P3 and that each include information on the radio cells covering the respective position, and signal characteristics of the radio signals received from the transmitters associated with those radio cells are schematically illustrated in Figure 3. For example, at the first position P1, radio signals from transmitters associated with radio cells 11, 13, and 16 are received. Just for the purpose of explanation it is assumed that the signal characteristic illustrated in Figure 3 is the signal strength. In the embodiment shown in Figure 3, a signal received from the transmitter associated with the radio cell 16 has a higher signal strength than the radio signals received from the transmitters associated with radio cells 11, 12. Signals from the transmitters associated with radio cells 12, 14, and 15 are weaker (more attenuated) and are not illustrated.

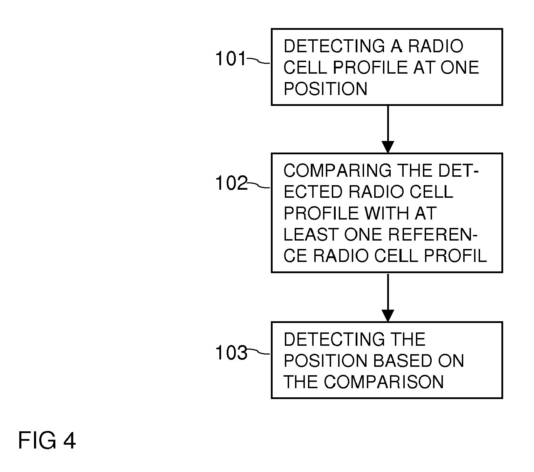

Figure 4 shows a flowchart that illustrates one embodiment of a method for detection a position based on radio cell profiles. This method may be performed by a conventional mobile electronic device, such as a mobile phone, a laptop computer, a tablet computer, or the like, that includes a wireless communication interface which makes it capable of detecting radio signals from radio signal transceivers of wireless communication systems. The method may be implemented using a software (a mobile app) running on the respective electronic device.

Referring to Figure 3, the method includes detecting a radio cell profile at one position, which is a position where the electronic device is currently located (step 101). The detected radio cell profile may be of the same type as the reference radio cell profiles explained herein before. That is, the detected radio cell profile may only include information on the radio cells that cover the position (as explained with reference to Figure 2), or may include information on the radio cells and the signal strengths (as explained with reference to Figure 3).

In next steps, the electronic device compares the detected radio cell profile with at least one reference radio cell profile (step 102 in Figure 3), and detects its position based on the comparison (step 103). Since the position detection is based on the comparison between the detected radio cell profile and the at least one reference radio cell profile, one or more positions that can be detected by this method are the one or more positions associated with the one or more reference radio cell profiles that are compared with the detected radio cell profile.

According to one embodiment, comparing the detected radio cell profile with the at least one reference radio cell profile includes detecting whether the detected radio cell profile matches one reference radio cell profile. If the detected radio cell profile matches one reference radio cell profile, it is assumed that the position of the electronic device corresponds to the reference position associated with the matching reference radio cell profile. In this connection it should be noted that a radio cell profile matching one reference radio cell profile is typically not only available at the exact reference position, but is also available in a region around the reference position. This region may cover several square meters or even several ten square meters. Thus, the position detection does not require to exactly "hit" one reference position, but only requires to come close to one reference position.

A decision whether the detected radio cell profile matches one reference profile may be based on different criteria. These criteria can be dependent on the type of reference radio cell profiles that are available. Some possible criteria are explained below.

First, it is assumed that the individual reference radio cell profiles are of the type explained with reference to Figure 2, so that each reference radio cell profile identifies a set of radio cells that cover the reference position associated with the respective reference radio cell profile. According to one embodiment the detected radio cell profile matches a reference radio cell profile if the detected radio cell profile identifies the same set of radio cells as the reference radio cell profile. According to another embodiment, the detected radio cell profile matches a reference radio cell profile if the set of radio cells represented by the detected radio cell profile and the set of radio cells represented by the reference radio cell profile have an intersection with a predefined number of radio cells. For example, it is assumed that the detected radio cell profile identifies a set with N radio cells, with N>1, the reference radio cell profile identifies a set with M radio cells, with M>1, and an intersection of these two sets includes U radio cells. In this case, the detected radio cell profile can be considered to match the reference radio cell profile if U includes a predefined number of radio cells, such as N-1 or N-2 radio cells. In this case, a position detection is possible even in those cases in which transmitters have been added or removed between the time when the reference profile has been measured and the time when the detected profile has been measured.

Now it is assumed that the individual reference radio cell profiles are of the type explained with reference to Figure 3, so that each reference radio cell profile identifies a set of radio cells that cover the reference position associated with the respective reference radio cell profile, and identifies signal strengths of radio signals received from transmitters associated with the respective radio cells. In this case, in order to detect whether the detected profile matches one reference profile, a difference between the detected profile and the reference profile may be calculated based on the signal strengths. For the purpose of explanation it is assumed that the detected profile identifies N radio cells and that $S_D(i)$ is the signal strength of a radio signal received from a transmitter associated with a radio cell i. Further, it is assumed that $S_R(i)$ is the signal strength of the radio signal received from the transmitter associated with the radio cell i at the reference position. This signal strength $S_D(i)$ is zero when this radio signal is not received at the reference position, that is when the radio cell i does not cover the reference position associated with the reference profile. In this case, calculating the difference may include calculating a mean square error D as follows:

$$D = \frac{1}{N}\sum_i (S_D(i) - S_R(i))^2 \qquad (1).$$

According to another embodiment, calculating the difference D may include calculating

$$D = \frac{1}{N_{D,R}}\sum_i \gamma_{D,R}(i)(S_D(i) - S_R(i))^2 \qquad (2).$$

According to one embodiment, $\gamma_{D,R}(i)$ is 0 or 1. According to another embodiment, $\gamma_{D,R}(i)$ has a value selected from the range between 0 and 1. $\gamma_{D,R}(i)$ is dependent on the specific radio cell i. $N_{D,R}$ is dependent on the entirety of radio cells that may be considered. According to one embodiment, $N_{D,R}$ is the sum of all $\gamma_{D,R}(i)$.

According to one embodiment, in equation (1) or (2) only a subset of signal characteristics $S_D(i)$ and the corresponding reference characteristics $S_R(i)$ is considered in calculating the difference D, namely a subset that includes signal characteristics for which $(S_D(i)-S_R(i))^2 < TH$, wherein TH is a predefined threshold. Instead of the square another metric, such as the absolute value may be used as well.

According to one embodiment, a detected radio cell profile matches a reference radio cell profile when the calculated difference D is below a predefined threshold. It should be mentioned that using the signal strengths for detecting whether a measured radio cell profile matches a reference radio cell profile is only an example. Other signal characteristics or combinations of other signal characteristics may be used as well. Further, the radio cell profile and the reference radio cell profile may include measured signal characteristics, or transformed signal characteristics. Transformed signal characteristics are signal characteristics obtained by applying a transformation function to the measured signal characteristics. This transformation function may include a linear function, a logarithmic function, or any other kind of non-linear function.

Based on the method explained above, an electronic device is capable of detecting its local position, in particular its local position in a building. This position information may be used in a variety of different ways. According to one embodiment, the position information can be used to navigate a user carrying the electronic device through the building. For this, a map of the building may be displayed on the electronic device, and the current position of the user may be shown in this map. This may, in particular, be useful in large office buildings, museums or the like.

For example, in museums, the position information may be used to select information that is displayed on the electronic device. For example, information on exhibits that are shown in a room in which the electronic device is currently located can be shown on the electronic device. This information can be stored on the electronic device beforehand, that is before entering the museum, or can be transmitted to the electronic device through one of the wireless networks that cover the position were the electronic device is currently located.

According to another embodiment, in office buildings, the position information is used to identify a printer (or another device the user may access) that is nearest to the current position, and documents from the electronic device are printed via this printer.

Although in some of the embodiments explained before, the electronic device may require access to one of the wireless networks that cover the position of the electronic device, the position detection does not require such access. The position detection is based on identifying radio cells that cover the position where the electronic device is currently located. Identifying a radio cell includes receiving a radio signal from a transmitter associated with the radio cell, and at least extracting a radio cell identifier (or a radio transmitter identifier) from this radio signal.

The method explained herein before uses radio transmitters of conventional communication networks for a position detection. These radio transmitters operate in a conventional way and have typically been installed for communication purposes. Due to the fact that different systems coexist and that these systems are still expanding (in particular the number of installed WIFI transmitters) is steadily increasing) different radio profiles exist within short geographical distances, so that the existing systems can be used for detecting positions with a high accuracy. However, there may be scenarios in which two adjacent rooms have the same (or very similar) radio cell profiles, so that it would not be possible to differentiate between positions in these two rooms. In those cases, an additional radio transmitter, such as a WIFI transmitter, or an RFID beacon may be positioned in one of these rooms, in order to make the radio cell profile in this room different from the radio cell profile in the other room. However, those additional radio transmitters are not required in each room, because in most of the cases the radio transmitters of the wireless communication systems provide for a unique radio cell profile.

According to embodiment, reference radio profiles stored on the mobile device may have an expiration date, or the use of the reference radio profiles by the mobile device may be dependent on other parameters. For example, a visitor entering a building may receive those reference radio profiles that are required for position detection within the building. These reference radio profiles may be valid only for a certain time period. That is, the visitor may use these reference radio profiles only for a predefined time period, such as the time period he is expected to be in the building. Further, the reference radio profiles he receives may be associated with a limited area of the building the user is allowed to access.

**Claims**

**1.** A method comprising:

detecting a radio cell profile by an electronic device;
comparing the detected radio cell profile with at least one reference radio cell profile that has a reference position associated therewith; and

detecting a position of the electronic device based on the comparison.

2. The method of claim 1,
   wherein comparing the detected radio cell profile with at least one reference radio cell profile comprises detecting whether the at least one radio cell profile matches the detected radio cell profile.

3. The method of claim 2,
   wherein detecting the position comprises associating with the electronic device the reference position of a reference radio cell profile that matches the detected radio cell profile.

4. The method of one of claims 1-3, wherein the at least one radio cell profile includes at least one radio cell identifier.

5. The method of claim 4, wherein the radio cell identifier is an identifier transmitted by a radio transmitter associated with the radio cell.

6. The method of claim 5, wherein the radio transmitter is a transmitter in one of a GSM, UMTS, and LTE network.

7. The method of claim 5, wherein the radio transmitter is one of a WIFI, RFID, Z-Wave, ZigBee, and Enocean transmitter.

8. The method of one of the preceding claims, wherein the at least one reference radio cell profile comprises at least one signal characteristic of a radio signal associated with a radio cell.

9. The method of claim 8,
   wherein the detected radio cell profile comprises at least one signal characteristic of a radio signal associated with a radio cell, and
   wherein comparing the detected radio cell profile with the at least one reference radio cell profile comprises calculating a difference based on the signal characteristics.

10. The method of claim 9,
    wherein calculating the difference comprises calculating a mean square error.

11. The method of claim 9,
    wherein the detected radio cell profile comprises a plurality of signal characteristics of radio signals,
    wherein the reference radio cell profile includes a plurality of signal characteristics of, and
    wherein calculating the difference comprises calculating a plurality of metrics, wherein each metric is dependent on a difference between a detected signal characteristic of the detected radio cell profile and the corresponding reference signal characteristic of the reference radio cell profile, wherein the detected signal characteristic and the reference signal characteristic are associated with the same radio cell.

12. The method of claim 11, wherein the difference is calculated to be dependent only on those metrics that are below a predefined threshold.

13. The method of one of the preceding claims,
    wherein the electronic device is a mobile computing device.

14. A computer program comprising software code adapted to perform method steps in accordance with one of the preceding claims.

FIG 1

FIG 2

FIG 3

101 — DETECTING A RADIO CELL PROFILE AT ONE POSITION

102 — COMPARING THE DET-ECTED RADIO CELL PROFILE WITH AT LEAST ONE REFEREN-CE RADIO CELL PROFIL

103 — DETECTING THE POSITION BASED ON THE COMPARISON

FIG 4

Europäisches
Patentamt

European
Patent Office

Office européen
des brevets

# EUROPEAN SEARCH REPORT

**Application Number**

EP 13 19 1828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rafael Saraiva Campos ET AL: "RF Fingerprinting Location Techniques" In: "Handbook of Position Location", 16 September 2011 (2011-09-16), John Wiley & Sons, Inc., Hoboken, NJ, USA, XP055114167, ISBN: 978-0-47-094342-7 pages 487-520, DOI: 10.1002/9781118104750.ch15, * page 487 - page 491 * * page 504 - page 505 * | 1-14 | INV. H04W64/00 G01S5/02 |
| X | Anthony Lamarca ET AL: "Place Lab: Device Positioning Using Radio Beacons in the Wild" In: "Field Programmable Logic and Application", 1 January 2005 (2005-01-01), Springer Berlin Heidelberg, Berlin, Heidelberg, XP055043782, ISSN: 0302-9743 ISBN: 978-3-54-045234-8 vol. 3468, pages 116-133, DOI: 10.1007/11428572_8, * paragraph [03.1] - paragraph [03.3] * | 1-14 | |
| X | US 2012/286997 A1 (LIN JYH-HAN [US] ET AL) 15 November 2012 (2012-11-15) * paragraph [0049] - paragraph [0052]; figure 6 * | 1-14 | |
| X | WO 2012/139250 A1 (ERICSSON TELEFON AB L M [SE]; SHI LIANG [CN]; HE BIN [CN]; LI LINJIANG) 18 October 2012 (2012-10-18) * paragraph [0024] - paragraph [0028]; figure 1 * * claims 1,2 * | 1-14 | |

**TECHNICAL FIELDS SEARCHED (IPC)**

H04W
G01S

The present search report has been drawn up for all claims

| Place of search | Date of completion of the search | Examiner |
|---|---|---|
| Munich | 15 April 2014 | Cremer, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 19 1828

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2014

| Patent document cited in search report | | Publication date | Patent family member(s) | | Publication date |
|---|---|---|---|---|---|
| US 2012286997 | A1 | 15-11-2012 | NONE | | |
| WO 2012139250 | A1 | 18-10-2012 | EP | 2698015 A1 | 19-02-2014 |
| | | | US | 2014038639 A1 | 06-02-2014 |
| | | | WO | 2012139250 A1 | 18-10-2012 |

EPO FORM P0459

For more details about this annex : see Official Journal of the European Patent Office, No. 12/82